# EUROPEAN PATENT SPECIFICATION

(11) **EP 2 406 188 B1**
(45) Date of publication and mention of the grant of the patent: **18.06.2014**
(21) Application number: 10716024.4
(22) Date of filing: 08.03.2010
(51) Int. Cl.: C02F 1/68, C02F 1/00, C02F 1/76, C02F 103/42

(54) **METHOD AND DEVICE FOR DISSOLVING SOLID SUBSTANCES IN WATER**
VERFAHREN UND VORRICHTUNG ZUM LÖSEN VON FESTEN SUBSTANZEN IN WASSER
PROCÉDÉ ET DISPOSITIF DE DISSOLUTION DE SUBSTANCES SOLIDES DANS DE L'EAU

(30) Priority: 09.03.2009 IT BO20090142
(43) Date of publication of application: 18.01.2012
(73) Proprietor: Marchi&Brevetti Interprise S.R.L. Con Unico Socio, Modena (IT)
(72) Inventor: BARANI, Corrado, I-41014 Castelvetro Di Modena (IT)
(74) Representative: Mangini, Simone
(86) International application number: PCT/IB2010/000474
(87) International publication number: WO 2010/103368

(56) References cited:
- WO-A1-99/35078
- WO-A1-2005/070837
- US-A- 4 867 196
- US-A1- 2005 244 315

## Description

### TECHNICAL FIELD

The present invention relates to a device, a system, and a method for dissolving a solid chemical substance in water.

The present invention finds advantageous application in the treatment of water for swimming pools, drinking water, industrial water, and water in general, in particular, but not exclusively, for dissolving in an optimal way solid derivatives of chlorine (calcium hypochlorite, isocyanides, mixtures or derivatives thereof, etc.), to which the ensuing description will make explicit reference without this implying any loss of generality.

### BACKGROUND ART

In the field of devices for dissolving a solid chemical substance in water, in particular in the field of water chlorination, it is known to use a device for dissolving solid substances in water comprising: a container, which has a collection portion for containing an aqueous solution; perforated supporting means (or in any case means permeable to liquids), which are set above the collection portion and are designed to support the solid chemical substance; and water-feeding means set above the supporting means for directing at least one jet of water onto the solid chemical substance to be dissolved.

The chlorinated water obtained by said dissolving process is currently left in the aforesaid container until it is fed into the swimming pool; for this reason, the solid chemical substances dissolved can precipitate, creating deposits inside the container. Normally, the solid chemical substances comprise calcium hypochlorite, and, consequently, within the container there may form deposits principally of calcium sulphate and calcium carbonate. Said undesirable deposits have the tendency to accumulate, in particular, around the connections that set the portion for collection of the chlorinated water in hydraulic communication with the ducts of an external hydraulic circuit that comprises the aforesaid swimming pool.

To overcome the periodic need to eliminate said deposits by means of manual intervention on the part of an operator, an intervention that involves interruption of operation of the device and, hence, of the treatment of the water of the swimming pool, it has been proposed in the past to provide mixing means, such as mechanical agitators, with propellers or blades, or nozzle agitators (supplied by a respective blower or by a pump), which are arranged at the collection portion and are designed to keep the chlorinated water contained therein in a state of agitation.

The above solution, albeit effective, entails additional installation costs and only manages to reduce, without eliminating altogether, the need to suspend operation of the chlorination device periodically and the feed of the chlorinated water to the swimming pool in order to carry out the operations of cleaning and maintenance of the mechanical members that constitute the agitators or the blower/pump for supplying the flow to the nozzles. Furthermore, said solution may involve a considerable expenditure in terms of energy, especially in the case where the volume of water to be kept in agitation is large.

It is moreover to be noted that, frequently, known dissolving devices comprise floats, the mechanisms of which are at least partially immersed in the chlorinated water. Said mechanisms tend to get damaged with particular frequency both on account of phenomena of corrosion and on account of salt deposits.

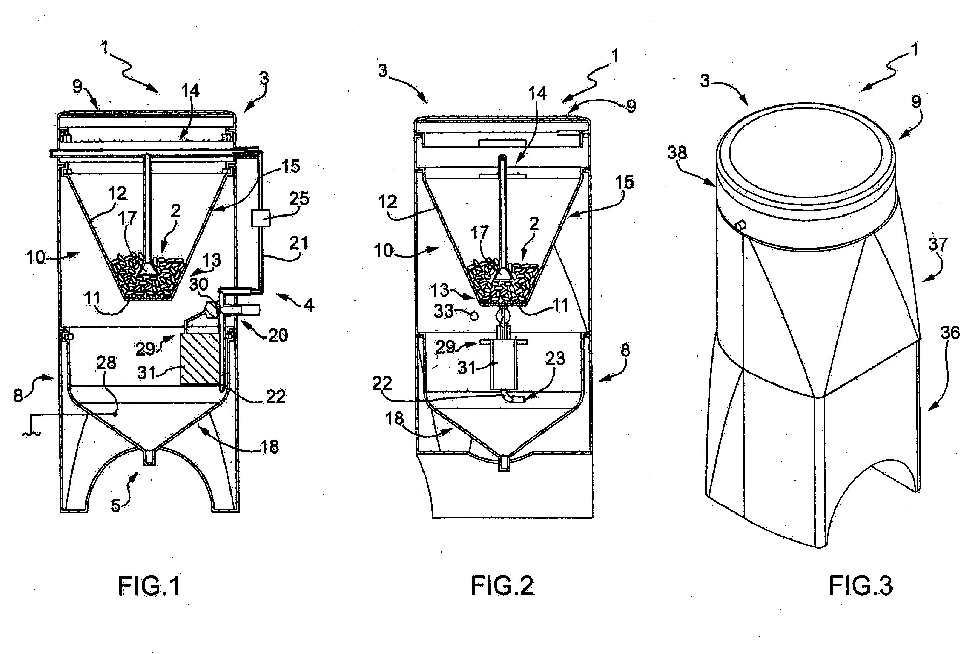

The document No. WO2005/070837 describes a device for dissolving a solid substance in water equipped with a mechanical agitator (Figure 1, reference number 8), a spray agitator (Figure 1, reference number 29) and floats with mechanisms immersed in the water. The device disclosed in W02005/070837 envisages discontinuous feed and discharge of water (see page 11, lines 5-23). In particular, the discharge of water is performed only when the concentration of solute in the external circuit is lower than a reference quantity; and feed occurs only in an intermittent way.

The document No. US2005/244315 describes different embodiments of a device for dissolving solid chemical substances. All the devices referred to in US2005/244315 have only feeding means for bringing the water into contact with the solid chemical substance and not further units (different from the feeding means) for keeping the solution containing the chemical substance in agitation (see the figures). According to some embodiments, constant amounts of water are fed into the device intermittently (in particular, see paragraph [0070] and the first three lines of paragraph [0068]). According to another embodiment, feed of water is continuous but constant.

The document No. WO99/35078 describes a system for water treatment. The system described in WO99/35078 envisages feed of water through a sprayer. The sprayer is operated intermittently (see in particular, page 7, lines 7-14; page 7, line 30; page 8, lines 11-14).

### DISCLOSURE OF INVENTION

The aim of the present invention is to provide a device, a system, and a method for dissolving a solid chemical substance that will overcome at least partially the drawbacks of the prior art and will be, at the same time, simple and inexpensive to produce.

In accordance with the present invention a device, a system, and a method for dissolving a solid chemical substance are provided according to what is recited in the ensuing independent claims and, preferably, in any one of the subsequent claims that depend either directly or indirectly upon the independent claims.

### BRIEF DESCRIPTION OF THE DRAWINGS

The present invention will now be described with reference to the annexed drawings, which illustrate non-limiting examples of embodiment thereof and in which:
- Figure 1 is a schematic illustration of a side cross section of a device provided in accordance with the present invention;
- Figure 2 illustrates a front cross section of the device of Figure 1;
- Figure 3 is a perspective view of the device of Figure 1;
- Figures 4, 5, and 6 are, respectively, a perspective view, a side view, and a top plan view, of a component of the device of Figure 1;
- Figures 7, 8 and 9 are, respectively, a perspective view, a side view, and a top plan view of a component of the device of Figure 1;
- Figures 10, 11 and 12 are, respectively, a perspective view, a side view, and a top plan view of a component of the device of Figure 1;
- Figures 13, 14, 15 and 16 are, respectively, a perspective view, a plan view from beneath, a view from the side, and a top plan view of a component of the device of Figure 1;
- Figure 17 is a top plan view of the device of Figure 1;
- Figures 18 and 19 illustrate details of Figure 1 at an enlarged scale;
- Figure 20 is a schematic illustration of a side cross section of a device provided in accordance with the present invention;
- Figure 21 illustrates a front cross section of the device of Figure 20;
- Figure 22 is a perspective view of the device of Figure 20;
- Figures 23, 24 and 25 are, respectively, a perspective view, a side view, and a top plan view of a component of the device of Figure 20;
- Figure 26 is a schematic illustration of a side cross section of a device provided in accordance with the present invention;
- Figure 27 illustrates a front cross section of the device of Figure 26;
- Figure 28 is a perspective view of the device of Figure 26;
- Figures 29, 30, and 31 are, respectively, a perspective view, a side view, and a top plan view of a component of the device of Figure 26;
- Figure 32 is a schematic illustration of a system provided in accordance with the present invention;
- Figure 33 is a schematic illustration of a system provided in accordance with the present invention;
- Figure 34 is a perspective view with parts not illustrated for reasons of clarity of the combination of two components of the device of Figure 1;
- Figure 35 is a partially sectioned top plan view of the detail of Figure 34;
- Figure 36 is a cross-sectional view along the line A-A of Figure 35;
- Figure 37 shows the two components of Figure 36 separate;
- Figure 38 illustrates a detail of Figure 34 at an enlarged scale;
- Figure 39 is a view from beneath of the detail of Figure 38; and
- Figure 40 illustrates a detail of Figure 36 at an enlarged scale.

### EMBODIMENTS OF THE INVENTION

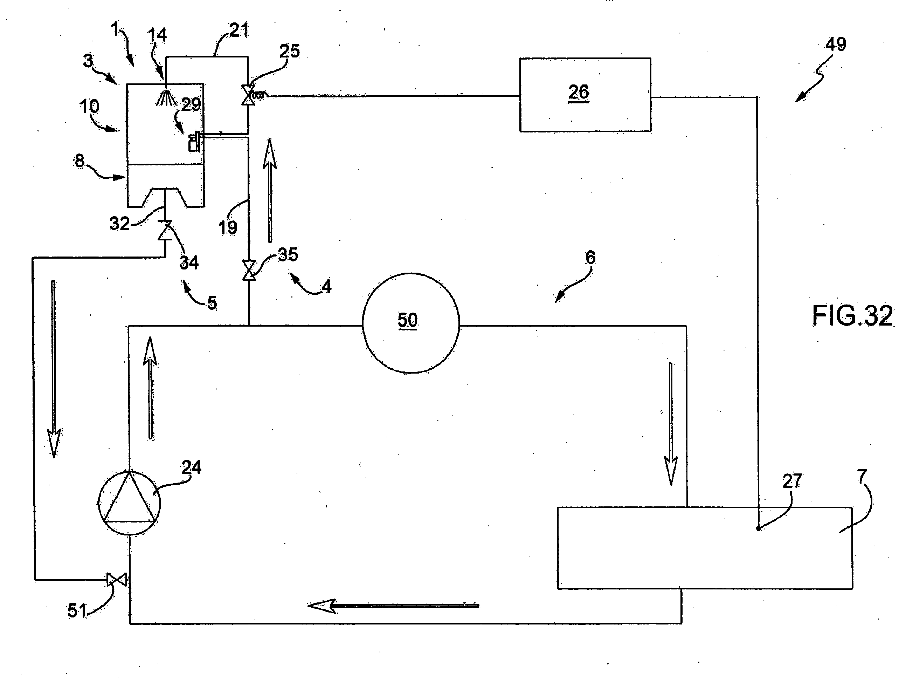

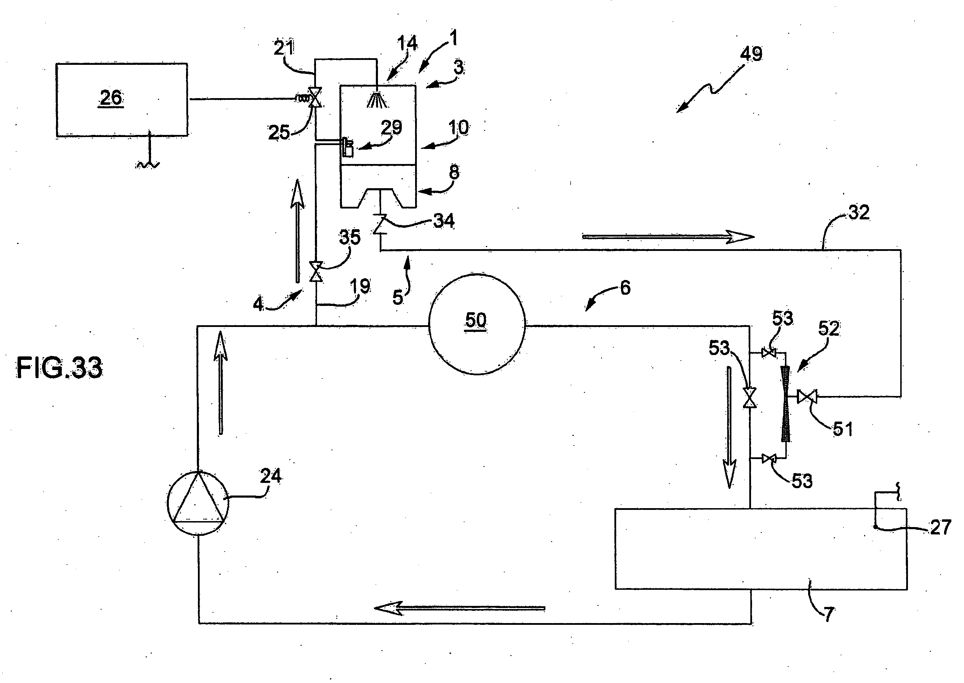

Designated as a whole by 1 in Figure 1 is a device for dissolving a solid chemical substance 2, in particular, but not exclusively, for chlorination of water for swimming pools, of drinking water, of industrial water, and of water in general. The device 1 comprises: a substantially cylindrical container 3, within which the solid chemical substance 2 is dissolved in water so as to obtain an aqueous solution; a feeding system 4 for conveying water into the container 3; and a discharging unit 5 for conveying the aqueous solution from the container 3 to an external hydraulic circuit 6, typically comprising a swimming pool (or in general, a tank) 7 (the hydraulic circuit 6 and the swimming pool (or tank) 7 are schematically illustrated in Figures 32 and 33).

The container 3 is set vertically, is provided with a collection portion 8 (Figure 1), which is designed to contain the aqueous solution, and is delimited at the top by a lid 9, which is set in contact with the container 3. The lid 9 enables, in particular, limitation of any emission of smells from the device 1.

The device 1 further comprises a charging chamber 10, which is set above the collection portion 8 within the container 3 and is designed to contain the solid chemical substance 2 for chlorination. In particular, the solid chemical substance 2 is in the form of tablets and may contain calcium hypochlorite, or isocyanides, and/or mixtures and/or derivatives thereof.

According to further embodiments (not illustrated), the solid chemical substance 2 may be in the form of powder or granules and may contain other types of salts.

The charging chamber 10 has substantially the shape of a truncated cone tapered downwards and is delimited by a perforated bottom wall 11 (which is hence permeable to liquids), designed to support at the bottom the solid chemical substance 2, and by a side wall 12, which is at least partially inclined and also partially perforated and is designed to contain the solid chemical substance 2 laterally. According to some embodiments, the holes in the side wall 12 extend up to a distance of 5-15 cm from the bottom wall 11.

The dimensions of the holes in the walls 11 and 12 are chosen according to the nature of the solid chemical substance 2; in particular, when the solid chemical substance 2 is in the form of tablets, the dimensions of the holes in the walls 11 and 12 are chosen as a function of the size of the tablets.

According to further embodiments (not illustrated), the charging chamber 10 has a shape chosen in the group consisting of: substantially conical, substantially frustopyramidal, and substantially pyramidal.

Advantageously, the angle of tapering is selected so as to favour progressive dropping, by gravity, of the tablets of the solid chemical substance 2 introduced into the charging chamber 10 in the direction of a dissolving portion 13 thereof. In this way, also in the case of a device 1 of large dimensions, it is sufficient to provide just one liquid-dispersing unit 14 in the dissolving portion 13, towards which, in use, the tablets progressively drop.

The solid chemical substance 2 is dissolved at said dissolving portion 13, which is delimited at the bottom by the bottom wall 11. The charging chamber 10 further comprises a storage portion 15, which is set above the dissolving portion 13 and is designed to contain the solid chemical substance 2 above the dissolving portion 13 itself.

The device 1 further comprises the unit 14 for dispersing the water, which is positioned above the bottom wall 11, in particular within the charging chamber 10, and is designed to direct at least one jet of water towards the solid chemical substance 2 contained in the dissolving portion 13. In particular, the liquid-dispersing unit 14 comprises a spray head 17 (advantageously adjustable in height with respect to the bottom 11), which is set at a top end of the dissolving portion 13 and is designed to direct the water downwards and/or laterally, but not upwards, in such a way as substantially not to wet the solid chemical substance 2 located above the spray head 17 and contained in the storage portion 15. In the presence of solid chemical substances with a high degree of solubility (such as calcium hypochlorite), the spray head 17 is positioned at 5-15 cm from the bottom wall 11. In the presence of solid chemical substances with low solubility (for example, trichloro-isocyanide), the spray head 17 can be located also in a higher position, even above the overall mass of the chemical substance to be dissolved.

In this way, dissolving of the solid chemical substance 2 occurs very gradually; advantageously, this determines a low development of ill-smelling gases and the right concentrations of the solute within the aqueous solution, with consequent limited possibility of formation of deposits due to the precipitation of the dissolved solid substances.

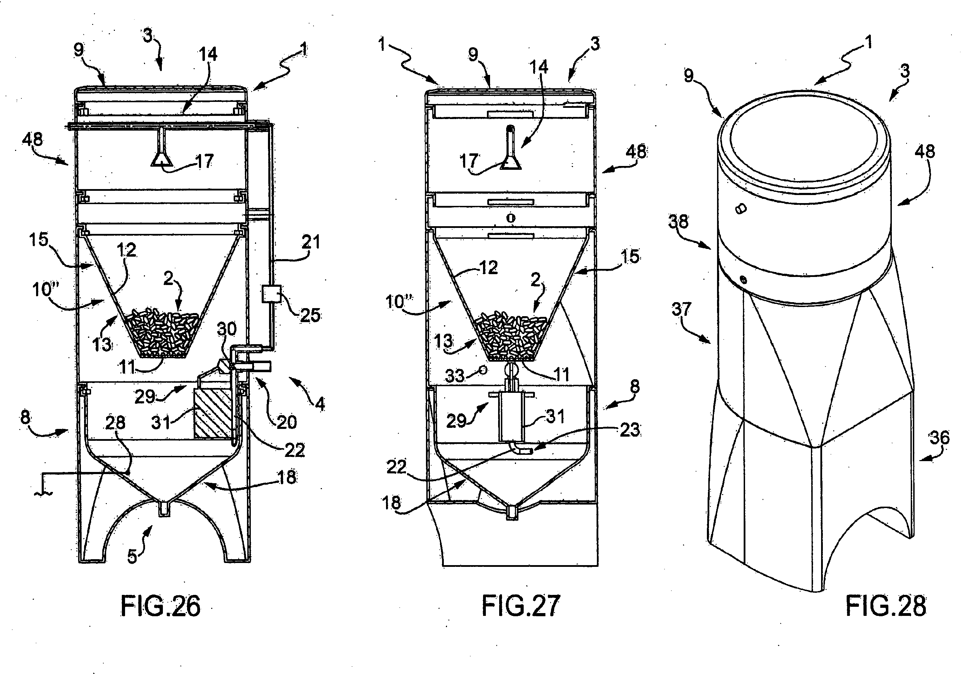

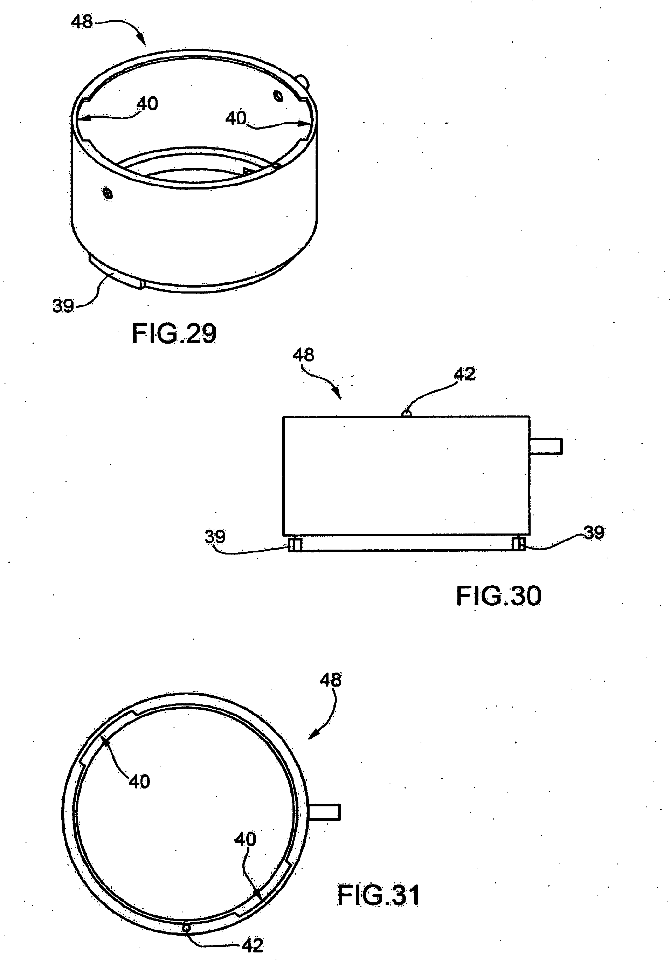

The position of the spray head 17 is consequently modifiable (as may, for example, be noted in the embodiment of Figures 26-31) according to the type of solid chemical substance 2, and can be set at any point in height along the axis of the liquid-dispersing unit 14.
The collection portion 8 comprises a bottom portion 18 having a substantially conical shape or the shape of a truncated cone tapered downwards. Advantageously, the angle of tapering of the side wall of the bottom portion 18 favours the flow of the water charged with solute (for example, chlorinated water, in the case where chlorine-based substances are used) downwards and at inlet to the discharging unit 5 and then towards the external hydraulic circuit 6, thus considerably reducing the likelihood of formation of deposits of precipitated salts.

According to embodiments (not illustrated), the bottom portion 18 has a shape chosen in the group consisting of: pyramidal and frustopyramidal.

The feeding system 4 comprises a duct 19 (Figures 32 and 33) for conveying the water coming from the external hydraulic circuit 6 to a T shaped connection 20 (Figure 1). The feeding system 4 further comprises a dispersion pipe 21 for conveying the water from the connection 20 to the liquid-dispersing unit 14, and a recirculation pipe 22 for conveying the water from the connection 20 to the collection portion 8.

The dispersion pipe 21 is in hydraulic communication with the liquid-dispersing unit 14. The recirculation pipe 22 has an end opening 23 set in the collection portion 8.

A flow of water coming from the external hydraulic circuit 6 and fed by means of a pump 24 into the feeding system 4 is divided, in use, between the dispersion pipe 21 and the recirculation pipe 22 as a function of the degree of opening of a regulating valve 25 provided on the dispersion pipe 22 itself. The degree of opening of the regulating valve 25 is governed, by means of manual intervention, by an operator or else, automatically, by a control unit 26 (Figures 32 and 33), which is activated in a timed way or as a function of the detection of a value of concentration (of the chemical substance). Said detection being obtained by means of a purposely provided sensor 27, set, for example, in the external hydraulic circuit 6 (Figures 32 and 33) and/or by means of a sensor 28 set in the collection portion 8 (Figure 1). According to particular embodiments, in use, when the sensor 27 detects a relatively low concentration, the control unit 26 governs the regulating valve 25 so as to increase the flow of liquid through the liquid-dispersing unit 14 (specifically, it increases the degree of opening of the regulating valve 25); when the sensor 27 detects a relatively high concentration, the control unit 26 governs the regulating valve 25 so as to reduce the flow of liquid passing through the liquid-dispersing unit 14 (specifically, it reduces the degree of opening of the regulating valve 25).

It is to be noted that the liquid-dispersing units 14 is different from the means for feeding the collection portion 8 (in particular, the pipe 22 and the opening 23). In this way, the liquid-dispersing unit 14 feeds the device 1 with a flow (i.e., at least one jet) of water different from a flow of water fed into the device 1 itself by the feeding means.

According to specific embodiments, the regulating valve 25 is of the open/close type. When the sensor 27 detects a concentration lower than a given value, the regulating valve 25 opens; when the sensor 27 detects a concentration higher than a given value, the regulating valve closes.

According to one aspect of the present invention, the device 1 further comprises a regulating unit 29 for regulating the passage of water through the recirculation pipe 22, in particular through the connection 20. Said regulating unit 29 comprises a maximum-level/minimum-level control valve 30 and a differential float 31, which is located preferably in the proximity of a wall of the collection portion 8 and movement of which determines the degree of opening of the valve 30 (and hence of the connection 20).

In other words, the regulating unit 29 regulates the amount of water that is fed into the pipes 21 and 22.

The regulating unit 29 is then designed to prevent emptying and overflow of the collection portion 8 through the discharging unit 5.

In particular, the valve 30 is a differential valve (namely, it is able to present different degrees of opening).

The float 31 is mobile between a respective lowered position and a respective raised position - in use, the float 31 is in the raised position when the aqueous solution reaches or exceeds a given maximum level.

The float 31 and the control valve 30 are connected by means of a mechanism (in itself known and not illustrated). In this way, the control valve 30 regulates the opening of the connection 20 as a function of the position of the float 31.

The float 31 opens the connection 20 progressively as a function of the level reached by the water charged with solute (for example, chlorinated water) in the collection portion 8. The greater the height of the float 31, the less the water that is fed in through the connection 20.

Once the connection 20 is opened, the float 31 enables feed of water from the recirculation branch into the collection portion 8 until the given maximum level is reached (raised position). When the float 31 is in the completely raised position, the connection 20 is completely closed (this, however, does not occur during normal operation, but only in the case of arrest or of poor operation due, for example, to a breakdown in the system).

In particular, the regulating unit 29 is designed so that the control valve 30 and the mechanism of connection to the float 31 are always above said given maximum level, i.e., always above the free surface of the aqueous solution contained in the collection portion 8. In this way, advantageously, the valve 30 with the corresponding hydraulic and/or mechanical connections never comes into contact with very concentrated aqueous solutions, even during the step of dissolving of the solid chemical substance 2 and, consequently, cannot be the site of undesirable deposits of saline precipitates potentially having a corrosive effect on their surfaces.

In use, the flow of water fed into the device 1 through the feeding system 4 is regulated in response to the variations in level of the aqueous solution in the collection portion 8. In use, the discharging unit 5 is substantially always open and enables substantially continuous discharge of the aqueous solution (chlorinated water) to the external hydraulic circuit 6.

In other words, during operation of the device 1, there is a substantially continuous (constant) flow of aqueous solution leaving the collection portion 8 through the discharging unit 5. It is to be noted that, advantageously, the flow rate of the discharging unit 5 is smaller than the maximum flow rate of the feeding system 4 (namely, of the duct 19).

Furthermore, in use, there is a flow at inlet into the collection portion 8 that is given by the sum of:
- a contribution of dispersion, constituted substantially by a flow of water, which, fed into the dissolving portion 13 by means of the liquid-dispersing unit 14, drops by gravity into the collection portion 8 through the corresponding bottom wall 11 and side wall 12, having dissolved part of the solid chemical substance 2 (the contribution of dispersion is regulated by the regulating unit 29 and by the regulating valve 25 according to what has been described previously);
- a contribution of recirculation, constituted by the portion of flow of water coming from the external hydraulic circuit 6 and conveyed through the recirculation pipe 22 (the contribution of dispersion is regulated by means of the regulating unit 29 according to what has been described previously).

It should be emphasized that the flow of water coming from the external hydraulic circuit 6 through the pipe 22 is maintained substantially continuous (albeit not always constant). In this regard, it should be noted that, in use, when the level of the aqueous solution within the collection portion 8 increases, the float 31 rises and gradually reduces the amount of liquid that is fed in through the recirculation pipe 22. When the flow of water fed in is less than the amount discharged, the float 31 again drops, opening more the connection 20. In this way, a sort of dynamic balance is achieved that enables a substantially continuous inflow and outflow of liquid into/from the collection portion 8.

The continuous flow thus brought about through the collection portion 8 keeps the aqueous solution contained therein advantageously in agitation, thus rendering superfluous the presence of mixers.

In this way, the precipitation of salts, chiefly calcium carbonate and calcium sulphate (in the case where calcium hypochlorite or similar products are used), and consequently the formation of deposits within the collection portion 8, becomes relatively unlikely.

The sensor 27 is designed for detecting the concentration of solute within the aqueous solution present in the external hydraulic circuit 6 upstream of a duct 32 of the discharging unit 5 (Figures 32 and 33). The duct 32 connects the bottom portion 18 hydraulically to the external hydraulic circuit 6.

The concentration sensor 28 is designed for detecting the concentration of solute within the aqueous solution present in the collection portion 8.

Advantageously, where, in use, the sensor 28 detects a concentration of solute outside a given range (in particular, when the concentration is too low), an alarm device (of a type in itself known and not illustrated) is activated, and the entire device 1 is blocked.

The control unit 26 is electrically connected to the regulating valve 25, to the pump 24, and to the sensors 27 and 28.

According to some embodiments, the control unit 26 is designed to actuate the regulating valve 25 on the basis of the detections made by the sensor 27 so as to maintain the concentration of solute in the water of the swimming pool (or tank) 7 (namely, in the water present in the external hydraulic circuit 6) between a minimum concentration and a maximum concentration. In particular, in use, when the concentration of solute detected by the sensor 27 is relatively close to the minimum concentration, the control unit 26 modifies the degree of opening of the regulating valve 25, thus altering the ratio between the flowrate of the contribution of dispersion and the flowrate of the contribution of recirculation so as to favour the contribution of dispersion. Consequently, a larger amount of solid chemical substance 2 is dissolved, thus obtaining a larger amount of concentrated aqueous solution that drops back into the collection portion 8 and, from there, proceeds continuously through the discharging unit 5 towards the external hydraulic circuit 6 (and then to the swimming pool or tank 7).

Instead, when the concentration of solute detected by the sensor 27 is relatively close to the maximum concentration, the control unit 26 modifies the degree of opening of the regulating valve 25, altering the ratio between the flowrate of the contribution of dispersion and that of the contribution of recirculation so as to favour the contribution of recirculation. Consequently, a smaller amount of solid substance 2 is dissolved, whilst a larger amount of water having low concentration of solute passes into the collection portion 8, as has been described previously.

The container 3 moreover has an overflow pipe 33 (Figures 2, 7 and 9) set above the float 31 and the collection portion 8. Said pipe 33 is designed, in the case of malfunctioning of the float 31, to discharge outside the aqueous solution so that the aqueous solution itself does not reach the lid 9 and overflow from the container 3.

The device 1 further comprises a retention valve 34 (Figures 32 and 33) set along the duct 32, said valve 34 being a one-way non-return valve and being designed to prevent a return of liquid into the container 3 from the hydraulic circuit 6 in the case where the dissolving device forming the subject of the present invention is below the hydrostatic head with respect to the level of the tank 7 (namely, when the pump 24 is stopped).

The feeding system 4 comprises a manual valve 35, which is set along the duct 19 and the degree of opening of which determines the maximum flow rate of the feeding system 4 (namely, of the duct 19).

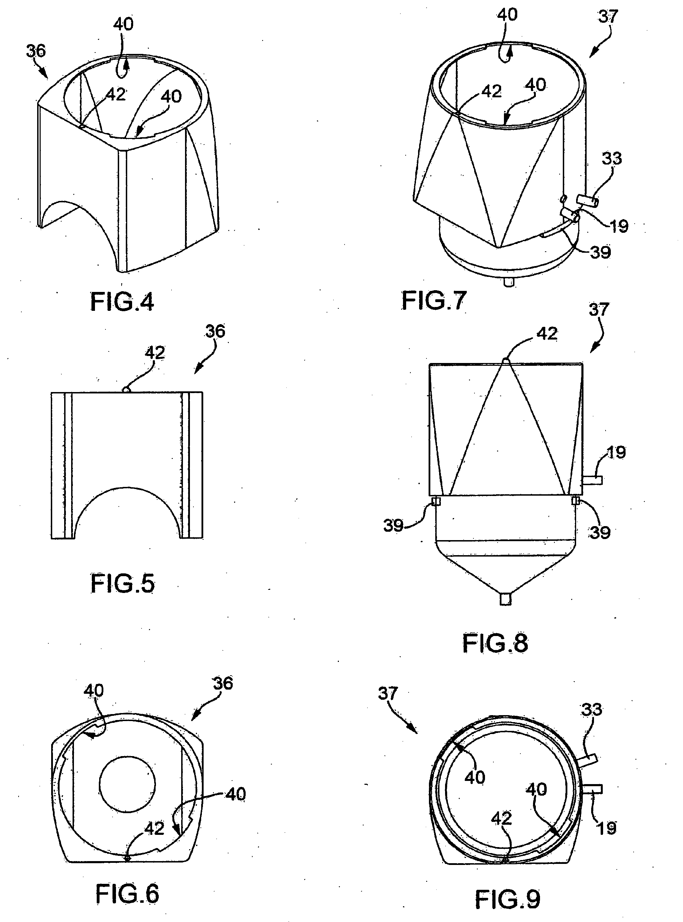

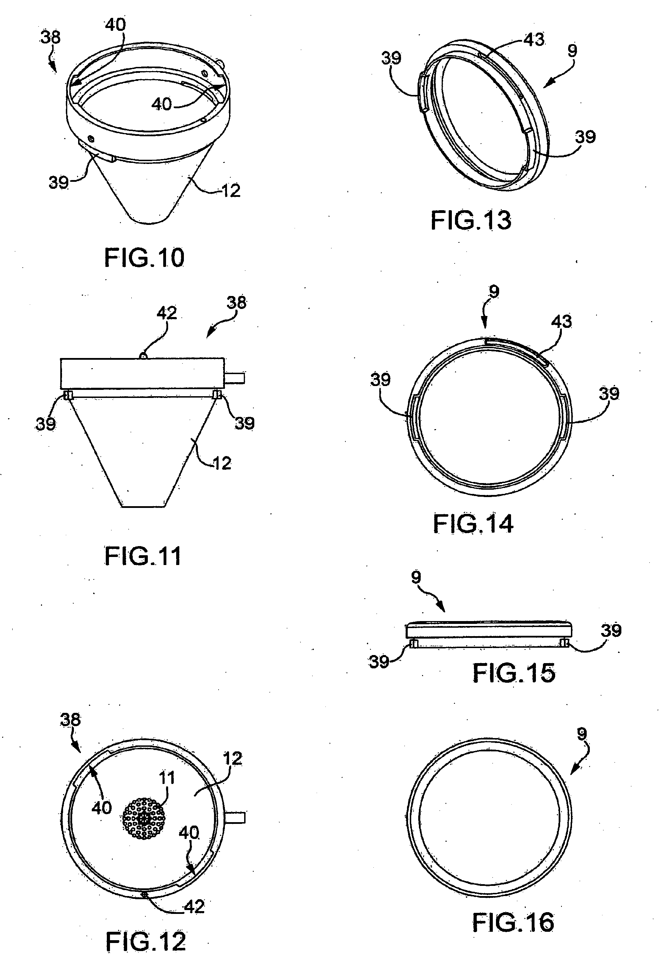

According to advantageous embodiments, the device 1 is made up of a plurality of modular components. According to the embodiment illustrated in Figures 1 to 3, the device 1 comprises: a supporting component 36 (illustrated in Figures 4 to 6); a base component 37 (illustrated in Figures 7 to 9), which defines the collection portion 8 and is mounted on the component 36; an intermediate component 38 (illustrated in Figures 10 to 12), which defines at the bottom the charging chamber 10 and is mounted on the component 37; and the lid 9.

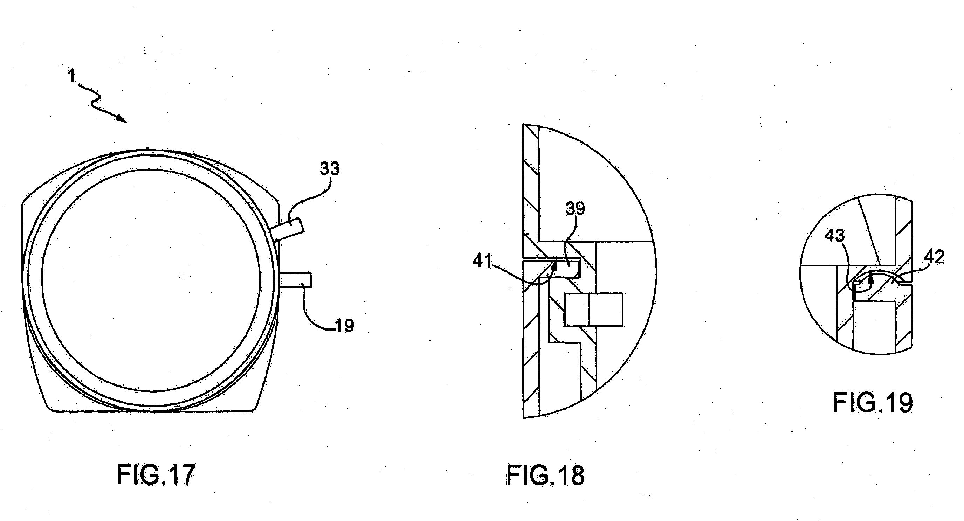

The various modular components described above (namely, the components 36, 37, 38 and the lid 9) can be connected to one another by means of fluid-tight couplings (for example, blocking mechanisms of the bayonet or frustoconical couplings, or other types of blocking mechanism) (examples of blocking mechanisms are illustrated in cross-sectional view and at an enlarged scale in Figures 18, 19 and 34-40).

In particular, each top modular component can comprise one or more (in the case in point two) projections or tabs (i.e., keys) 39 (see, for example, Figures, 10, 11, 13, 14, 15, 18 and 19), which project laterally and which, during the step of installation of the device 1, are inserted in the respective slots or seats 40 of the corresponding bottom modular component. Each bottom modular component moreover has guide channels 41 that are engaged by the projections 39 by turning the top modular component after the projections 39 have been inserted in the corresponding slots 40.

Each bottom modular component has an element 42 that projects upwards and is designed to be inserted in a respective seat 43 (illustrated in cross-sectional view and at an enlarged scale in Figure 19) of a downward-facing surface of the corresponding top modular component. In this way, the possibility of any relative rotation between the modular components is limited.

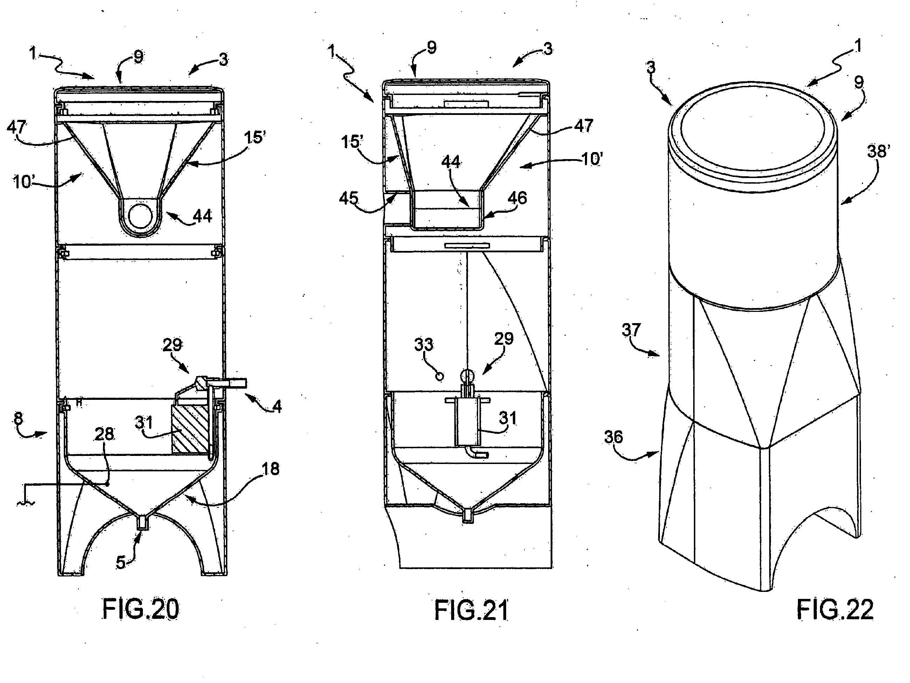

Figures 20-25 illustrate a further embodiment of the device 1, which is substantially identical to the device 1 of Figures 1-19 and differs from the latter exclusively as regards the structure of the charging chamber 10' with respect to the charging chamber 10. The device 1 of Figures 20-25 is particularly suited for use with a solid chemical substance 2 - in powder or granular form.

In this case, the charging chamber 10' comprises: an auger feeder or else some other device designed for dispensing material in powder and/or granular form, at the same time preventing the effect of packing thereof within the chamber 10' (said devices are in themselves known and are hence not illustrated), which is set in a housing 44; and a side seat 45, positioned in which is a motor for driving the auger feeder. The housing 44 has a side opening 46, through which, in use, the solid chemical substance 2 is directly fed into the collection portion 8.

The charging chamber 10' moreover has a storage portion 15', which is designed to contain the solid chemical substance in powder or granular form, is set above the auger feeder (i.e., the housing 44), is delimited laterally by a wall 47, and is tapered in the direction of the housing 44.

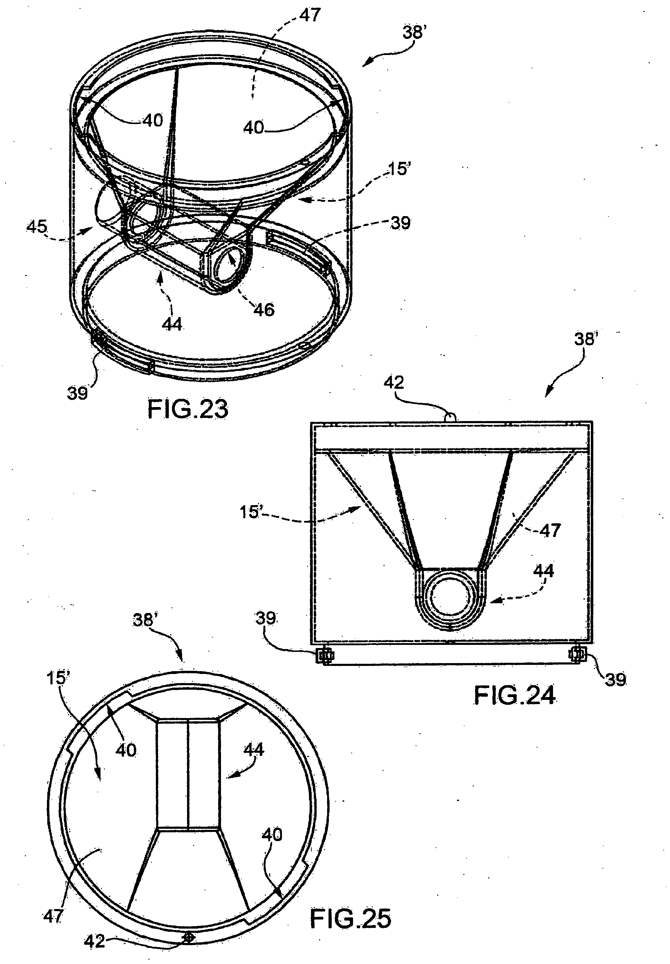

The device 1 of Figures 20-25 consequently has, instead of the intermediate component 38, an intermediate component 38' (illustrated in Figures 23-25).

Figures 26-31 represent a further embodiment of the device 1, which is substantially identical to the device 1 of Figures 1-19 and differs from the latter exclusively as regards the structure of its own charging chamber 10'' with respect to the charging chamber 10. The device 1 of Figures 26-31 is particularly suited to the use of a solid chemical substance 2 containing (in particular consisting of) trichloro-isocyanide (C₃Cl₃N₃O₃ of structural formula: 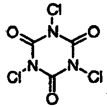 ), or else other products in the form of tablets with an extremely low solubility.

In this case, the spray head 17 is set above the storage portion 15. Like this, it is possible to moisten the solid chemical substance 2 for long periods, thus favouring dissolving thereof.

It should moreover be noted that the charging chamber 10'' of the device 1 of Figures 26-31 is taller than the charging chamber 10.

The device 1 of Figures 26-31, in addition to the components 36, 37, 38 and the lid 9, has a further top component 48, which is mounted between the lid 9 and the intermediate component 38.

From what has been set forth above, it is clear that the modular structure of the device 1 (in particular of the container 3) enables, by adding and/or replacing a component, modification of the functionality of the device 1 itself, adapting it to the different types of solid chemical substance 2 in an extremely simple way.

According to a further aspect of the present invention, a system 49 is provided, comprising the device 1 and the external hydraulic circuit 6, as defined above. In particular, an embodiment of the system 49 is illustrated in Figure 32. The external hydraulic circuit 6 is connected to the duct 19 downstream of the pump 24 and has a filter 50 set between the duct 19 and the swimming pool (or tank) 7. The duct 32 is connected to the external hydraulic circuit 6 downstream of the swimming pool (or tank) 7 and upstream of the pump 24. The duct 32 is connected by means of a manual valve 51 to the external hydraulic circuit 6.

The degree of opening of the valve 51 defines the flow rate of the discharging unit 5 (i.e., of the duct 32).

Regulation of the valve 51 and of the manual valve 35 enables determination of the ratio between the flow rate of the discharging unit 5 and the maximum flow rate of the duct 19.

In particular, the valve 51 and the manual valve 35 are regulated (usually manually by an operator during installation of the device 1) so that, as has been said, the maximum flow rate of the duct 19 is greater than the flow rate of the discharging unit 5.

Figure 33 illustrates a further embodiment of the system 49, which is substantially identical to the system 49 and from which it differs only as regards the aspects outlined in what follows. The duct 32 is connected to the external hydraulic circuit 6 upstream of the swimming pool (or tank) 7 and, in particular, downstream of the filter 50. Furthermore, a Venturi system 52 with corresponding valves 53 is set between the manual valve 51 and the external hydraulic circuit.

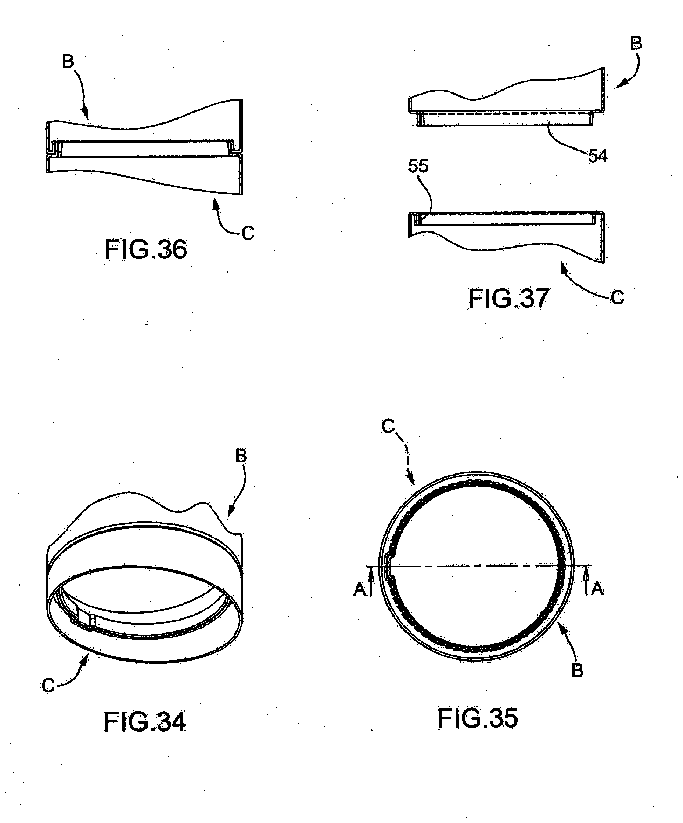

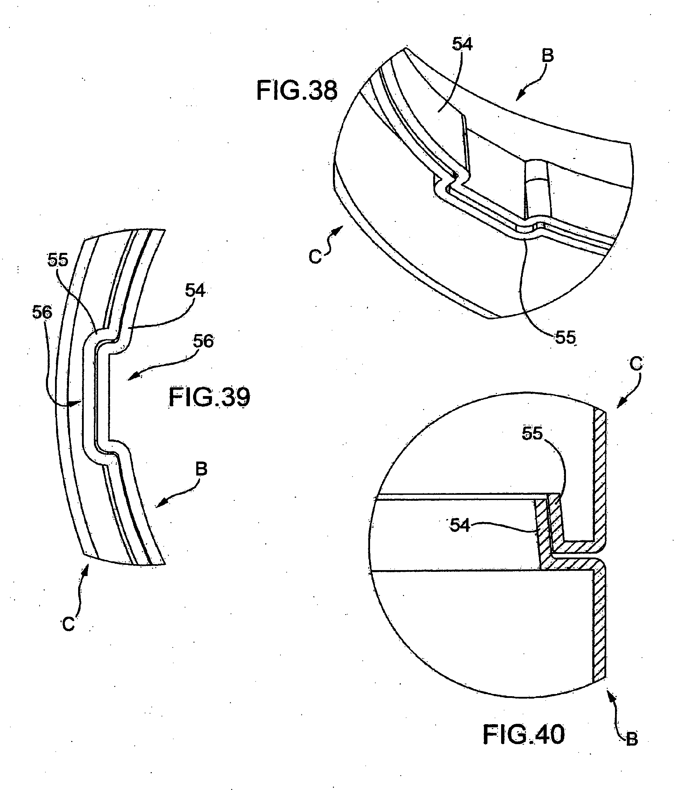

Figures 34-40 illustrate a variant of the fluid-tight couplings designed to connect the modular components described above. In particular, in the variant of Figures 34-40, a first component B has a male connection element 54 and a second component C has a female connection element 55. The connection elements 54 and 55 each have the shape of a truncated cone with respective deformed portions 56 that enable a correct relative angular positioning of the components B and C. The connection elements 54 and 55 are sized so that an external surface of the male connection element 54 mates with an internal surface of the connection element 55 (as illustrated more fully in Figure 40). The coupling of the aforesaid internal and external surfaces (together with a slight elastic deformation of the connection elements 54 and 55) guarantees a stable and fluid-tight mechanical connection of the components B and C.

It is to be noted that the couplings of Figures 34-40 are particularly easy to produce and enable very simple assembly/disassembly of the device 1.

## Claims

1. A device for dissolving a solid chemical substance (2) in a liquid; the device (1) comprising: a container (3), which has a collection portion (8) for containing the liquid, and a charging chamber (10), which is set above the collection portion (8), is designed to contain the solid chemical substance (2) and is equipped with supporting means (11, 12) designed to support the solid chemical substance (2); and a liquid-dispersing unit (14) for directing at least one jet of liquid onto said solid chemical substance (2); the device (1)comprising feeding means (22, 23) for feeding the liquid to the collection portion (8) and a discharging unit (5) for conveying the liquid from the container (3) to a hydraulic circuit (6); the device (1) being **characterized in that** said discharging unit (5) is designed to feed the aqueous solution to the hydraulic circuit (6) in a substantially continuous way; the device (1) comprising a first regulating unit (29) for regulating the passage of liquid through the feeding means (22, 23) so that feeding of the liquid through the feeding means (22, 23) is substantially continuous and the liquid in the collection portion (8) does not reach a given maximum level; said first regulating unit (29) comprises a differential control valve (30) and a float (31), which is mobile vertically as a function of the level of the liquid in the collection portion (8) and is connected to the control valve (30); and the feeding means (22, 23) comprise a recirculation pipe (22) through which, in use, the flow of liquid coming from the hydraulic circuit (6) enters the collection portion (8); the control valve (30) being designed to regulate the passage of liquid through the recirculation pipe (22); in particular, the more the float (31) is raised, the more the control valve (30) closes the pipe (22).

2. The device according to Claim 1, wherein the control valve (30) is set above the collection portion (8), in particular above the given maximum level.

3. The device according to Claim 1 or Claim 2, and comprising a connection mechanism between the control valve (30) and the float (31); the connection mechanism being set above the collection portion (8), in particular above the given maximum level.

4. The device according to any one of the preceding claims, wherein the first regulating unit (29) is designed to regulate the passage of liquid through the feeding means (22, 23); a dynamic balance being achieved that enables a continuous inflow and outflow of the liquid into/from the collection portion (8).

5. The device according to any one of the preceding claims, and comprising: a duct (19), which is connected hydraulically to the hydraulic circuit (6); and a pipe connection (20), in particular a T shaped connection, connected to which are the duct (19), the liquid-dispersing unit (14), and the feeding means (22, 23) and in a position corresponding to which the control valve (30) is set and acts.

6. The device according to any one of the preceding claims, and comprising a second regulating unit (25) designed to regulate a flow of liquid through the liquid-dispersing unit (14).

7. The device according to Claim 6, and comprising: sensor means (27; 28) for detecting the concentration of the chemical substance in the liquid; and a control unit (26), which is connected to the sensor means (27; 28) and to the second regulating unit (25) for governing the regulating unit (25) as a function of what is detected by the sensor means.

8. The device according to one of to any one of the preceding claims, wherein the hydraulic circuit (6) is hydraulically connected to the dispersing unit (14) and to the feeding means (22, 23) for feeding the liquid to the dispersing unit (14) and to the feeding means (22, 23).

9. The device according to any one of the preceding claims, wherein said supporting means (11, 12) comprise side containment means (12), which are at least partially inclined and are designed to support the solid chemical substance (2) laterally.

10. The device according to any one of the preceding claims, wherein the charging chamber (10) has at least partially a shape tapered downwards.

11. The device according to Claim 10, wherein the charging chamber (10) has at least partially a shape chosen in the group consisting of: substantially conical, substantially frustoconical, substantially pyramidal, substantially frustopyramidal.

12. The device according to any one of the preceding claims, wherein said supporting means (11, 12) are at least in part permeable to liquids.

13. The device according to any one of the preceding claims, wherein said collection portion (8) comprises a bottom portion (18) having a shape substantially tapered downwards; in particular, the bottom portion (18) has inclined side walls.

14. The device according to Claim 13, wherein the bottom portion (18) has a shape chosen in the group consisting of: substantially conical, substantially frustoconical, substantially pyramidal, substantially frustopyramidal.

15. The device according to any one of the preceding claims, wherein the container (3) is modular.

16. A method for dissolving a solid chemical substance (2) in a liquid and feeding a solution of the liquid and of the chemical substance to a hydraulic circuit (6), which in particular comprises a tank (7); the method comprising the steps of:
dissolving the solid chemical substance (2) in a device (1) by feeding to the device (1) a first flow of liquid coming from the hydraulic circuit (6) so that said first flow comes into contact with the solid chemical substance (2) and dissolves the solid chemical substance (2) itself at least partially,
and said solution is obtained; and
collecting the solution in a collection portion (8) of said device (1);
the method **being characterized in that it** comprises the steps of:
feeding in a substantially continuous way the solution contained in the collection portion (8) to the hydraulic circuit (6);
feeding a second flow of liquid from the hydraulic circuit (6) to the device (1) at the collection portion (8) in a substantially continuous way and so that the solution in the collection portion (8) does not reach a given maximum level; and
a step of regulating the rate of said second flow of liquid by means of a regulating unit (29) as a function of the level of the solution at the collection portion (8).

17. The method according to Claim 16, wherein a dynamic balance is achieved that enables a continuous inflow and outflow of the liquid into/from the collection portion (8).

18. The method according to Claim 16 or 17, wherein the rate of said first flow is modified in time; in particular, the first flow is discontinuous and is alternately blocked and activated.

19. The method according to any one of Claims 16 to 18, wherein the device (1) is defined in accordance with any one of Claims 1 to 15.

20. A system comprising a device (1) for dissolving a solid chemical substance (2) and a hydraulic circuit (6) as defined in accordance with any one of Claims 1 to 15.

## Patentansprüche

1. Vorrichtung zum Lösen einer festen chemischen Substanz (2) in einer Flüssigkeit; wobei die Vorrichtung (1) aufweist: einen Behälter (3), der einen Sammelabschnitt (8) zum Aufnehmen der Flüssigkeit und eine Beschickungskammer (10) hat, die über dem Sammelabschnitt (8) angeordnet ist und die dafür ausgelegt ist, die feste chemische Substanz (2) aufzunehmen, und die mit tragenden Mitteln (11, 12) ausgerüstet ist, die dafür ausgelegt sind, die feste chemische Substanz (2) zu halten; und eine Flüssigkeitsverteilungseinrichtung (14) zum Lenken zumindest eines Flüssigkeitsstrahls auf die feste chemische Substanz (2); wobei die Vorrichtung (1) aufweist: Eine Einspeiseeinrichtung (22, 23) zum Einspeisen der Flüssigkeit zum Sammelabschnitt (8) und eine Ablasseinheit (5) zum Befördern der Flüssigkeit aus dem Behälter (3) zu einem Hydraulikkreis (6); wobei die Vorrichtung (1) **dadurch gekennzeichnet ist, dass** die Ablasseinheit (5) dafür ausgelegt ist, die wässrige Lösung zum Hydraulikkreis (6) im Wesentlichen kontinuierlich einzuspeisen; wobei die Vorrichtung (1) eine erste Stelleinheit (29) zum Regeln des Flüssigkeitsdurchlaufs durch die Einspeiseeinrichtung (22, 23) aufweist, so dass das Einspeisen von Flüssigkeit durch die Einspeiseeinrichtung (22, 23) im Wesentlichen kontinuierlich erfolgt und die Flüssigkeit im Sammelabschnitt (8) einen vorgegebenen Höchststand nicht erreicht; wobei das erste Stellglied (29) ein Differentialregelventil (30) und einen Schwimmer (31) aufweist, der entsprechend des Füllstands der Flüssigkeit im Sammelabschnitt (8) vertikal beweglich und mit dem Regelventil (30) verbunden ist; und die Einspeiseeinrichtung (22, 23) ein Zirkulationsrohr (22) aufweist, durch das bei Verwendung der aus dem Hydraulikkreis (6) kommende Flüssigkeitsstrom in den Sammelabschnitt (8) eintritt; wobei das Regelventil (30) dafür ausgelegt ist, den Flüssigkeitsdurchlauf durch das Zirkulationsrohr (22) zu regeln; wobei insbesondere das Regelventil (30) das Rohr (22) um so mehr schließt, je höher der Schwimmer (31) steigt.

2. Vorrichtung nach Anspruch 1, wobei das Regelventil (30) über dem Sammelabschnitt (8) angeordnet ist, insbesondere über dem vorgegebenen Höchststand.

3. Vorrichtung nach Anspruch 1 oder 2 und mit einem Verbindungsmechanismus zwischen dem Regelventil (30) und dem Schwimmer (31); wobei der Verbindungsmechanismus über dem Sammelabschnitt (8) angeordnet ist, insbesondere über dem vorgegebenen Höchststand.

4. Vorrichtung nach einem der vorhergehenden Ansprüche, wobei die erste Stelleinheit (29) dafür ausgelegt ist, den Flüssigkeitsdurchlauf durch die Einspeiseeinrichtung (22, 23) zu regeln; wobei ein dynamisches Gleichgewicht erreicht wird, das einen kontinuierlichen Zu- und Abfluss der Flüssigkeit in den bzw. aus dem Sammelabschnitt (8) ermöglicht.

5. Vorrichtung nach einem der vorhergehenden Ansprüche und mit einer Leitung (19), die mit dem Hydraulikkreis (6) hydraulisch verbunden ist; und einer Rohrverbindung (20), insbesondere einer T-förmigen Verbindung, mit der die Leitung (19), die Flüssigkeitsverteilungseinheit (14) und die Einspeiseeinrichtung (22, 23) verbunden sind, und in einer Position, entsprechend der das Regelventil (30) angeordnet ist und funktioniert.

6. Vorrichtung nach einem der vorhergehenden Ansprüche und mit einer zweiten Stelleinheit (25), die dafür ausgelegt ist, einen Flüssigkeitsstrom durch die Flüssigkeitsverteilungseinheit (14) zu regeln.

7. Vorrichtung nach Anspruch 6 und mit einer Sensoreinrichtung (27; 28) zum Ermitteln der Konzentration der chemischen Substanz in der Flüssigkeit; und einer Regeleinheit (26), die mit der Sensoreinrichtung (27; 28) und der zweiten Stelleinheit (25) verbunden ist, zum Regeln der Stelleinheit (25) entsprechend dem, was die Sensoreinrichtung ermittelt.

8. Vorrichtung nach einem der vorhergehenden Ansprüche, wobei der Hydraulikkreis (6) mit der Verteilungseinheit (14) und der Einspeiseeinrichtung (22, 23) hydraulisch verbunden ist, zum Einspeisen der Flüssigkeit in die Verteilungseinheit (14) und in die Einspeiseeinrichtung (22, 23).

9. Vorrichtung nach einem der vorhergehenden Ansprüche, wobei die tragenden Mittel (11, 12) eine Seiteneinfassungseinrichtung (12) aufweisen, die zumindest teilweise geneigt und dafür ausgelegt ist, die feste chemische Substanz (2) seitlich zu stützen.

10. Vorrichtung nach einem der vorhergehenden Ansprüche, wobei die Beschickungskammer (10) zumindest teilweise eine sich nach unten verjüngende Form hat.

11. Vorrichtung nach Anspruch 10, wobei die Beschickungskammer (10) zumindest teilweise eine Form hat, die aus der Gruppe gewählt ist, die besteht aus: im Wesentlichen konisch, im Wesentlichen kegelstumpfförmig, im Wesentlichen pyramidenförmig, im Wesentlichen pyramidenstumpfförmig.

12. Vorrichtung nach einem der vorhergehenden Ansprüche, wobei die tragenden Mittel (11, 12) zumindest teilweise durchlässig für Flüssigkeiten sind.

13. Vorrichtung nach einem der vorhergehenden Ansprüche, wobei der Sammelabschnitt (8) einen unteren Abschnitt (18) mit einer sich im Wesentlichen nach unten verjüngenden Form aufweist; wobei insbesondere der untere Abschnitt (18) geneigte Seitenwände hat.

14. Vorrichtung nach Anspruch 13, wobei der untere Abschnitt (18) eine Form hat, die aus der Gruppe gewählt ist, die besteht aus: im Wesentlichen konisch, im Wesentlichen kegelstumpfförmig, im Wesentlichen pyramidenförmig, im Wesentlichen pyramidenstumpfförmig.

15. Vorrichtung nach einem der vorhergehenden Ansprüche, wobei der Behälter (3) modular aufgebaut ist.

16. Verfahren zum Lösen einer festen chemischen Substanz (2) in einer Flüssigkeit und zum Einspeisen einer Lösung der Flüssigkeit und der chemischen Substanz in einen Hydraulikkreis (6), der insbesondere einen Tank (7) aufweist, wobei das Verfahren die folgenden Schritte aufweist:
Lösen der festen chemischen Substanz (2) in einer Vorrichtung (1) durch Einspeisen eines aus dem Hydraulikkreis (6) kommenden ersten Flüssigkeitsstroms in die Vorrichtung (1), so dass der erste Strom mit der festen chemischen Substanz (2) in Kontakt kommt und die feste chemische Substanz (2) selbst zumindest teilweise löst und die Lösung gewonnen wird; und
Sammeln der Lösung in einem Sammelabschnitt (8) der Vorrichtung (1);
wobei das Verfahren **dadurch gekennzeichnet ist, dass** es die folgenden Schritte aufweist:
im Wesentlichen kontinuierliches Einspeisen der im Sammelabschnitt (8) enthaltenen Lösung in den Hydraulikkreis (6);
im Wesentlichen kontinuierliches Einspeisen eines zweiten Flüssigkeitsstroms aus dem Hydraulikkreis (6) in die Vorrichtung (1) beim Sammelabschnitt (8), so dass die Lösung im Sammelabschnitt (8) einen vorgegebenen Höchststand nicht erreicht; und
einen Schritt des Regelns der Rate des zweiten Flüssigkeitsstroms mittels einer Stelleinheit (29) entsprechend dem Füllstand der Lösung im Sammelabschnitt (8).

17. Verfahren nach Anspruch 16, wobei ein dynamisches Gleichgewicht erreicht wird, das einen kontinuierlichen Zu- und Abfluss der Flüssigkeit in den bzw. aus dem Sammelabschnitt (8) ermöglicht.

18. Verfahren nach Anspruch 16 oder 17, wobei die Rate des ersten Stroms zeitlich modifiziert wird; insbesondere der erste Strom diskontinuierlich ist und abwechselnd blockiert und aktiviert wird.

19. Verfahren nach einem der Ansprüche 16 bis 18, wobei die Vorrichtung (1) eine Vorrichtung nach einem der Ansprüche 1 bis 15 ist.

20. System mit einer Vorrichtung (1) zum Lösen einer festen chemischen Substanz (2) und einem Hydraulikkreis (6) nach einem der Ansprüche 1 bis 15.

## Revendications

1. Dispositif pour dissoudre une substance chimique solide (2) dans un liquide; le dispositif (1) comprenant: un récipient (3), qui présente une partie de collecte (8) pour contenir le liquide, et une chambre de chargement (10) qui est située au-dessus de la partie de collecte (8), qui est conçue pour contenir la substance chimique solide (2) et qui est équipée de moyens de support (11, 12) prévus pour supporter la substance chimique solide (2); et une unité de dispersion de liquide (14) pour diriger au moins un jet de liquide sur ladite substance chimique solide (2); le dispositif (1) comprenant des moyens d'alimentation (22, 23) pour amener le liquide à la partie de collecte (8), et une unité de déchargement (5) pour transporter le liquide du récipient (3) à un circuit hydraulique (6); le dispositif (1) étant **caractérisé en ce que** ladite unité de déchargement (5) est conçue pour amener la solution aqueuse au circuit hydraulique (6) d'une façon sensiblement continue; le dispositif (1) comprenant une première unité de régulation (29) pour réguler le passage de liquide à travers les moyens d'alimentation (22, 23) de telle sorte que la fourniture du liquide à travers les moyens d'alimentation (22, 23) soit sensiblement continue et que le liquide dans la partie de collecte n'atteigne pas un niveau maximum donné; ladite première unité de régulation (29) comprend une soupape de commande différentielle (30) et un flotteur (31), qui est mobile verticalement en fonction du niveau du liquide dans la partie de collecte (8) et qui est connecté à la soupape de commande (30); et les moyens d'alimentation (22, 23) comprennent un tuyau de recirculation (22) à travers lequel, lors de l'utilisation, l'écoulement de liquide arrivant en provenance du circuit hydraulique (6) entre dans la partie de collecte (8); la soupape de commande (30) étant conçue pour réguler le passage de liquide à travers le tuyau de recirculation (22); en particulier, plus le flotteur (31) est élevé, plus la soupape de commande (30) ferme le tuyau (22).

2. Dispositif selon la revendication 1, dans lequel la soupape de commande (30) est disposée au-dessus de la partie de collecte (8), en particulier au-dessus du niveau maximum donné.

3. Dispositif selon la revendication 1 ou la revendication 2, et comprenant un mécanisme de connexion entre la soupape de commande (30) et le flotteur (31); le mécanisme de connexion étant disposé au-dessus de la partie de collecte (8), en particulier au-dessus du niveau maximum donné.

4. Dispositif selon l'une quelconque des revendications précédentes, dans lequel la première unité de régulation (29) est conçue pour réguler le passage de liquide à travers les moyens d'alimentation (22, 23); un équilibre dynamique étant obtenu qui permet un écoulement d'entrée et un écoulement de sortie continus du liquide dans/hors de la partie de collecte (8).

5. Dispositif selon l'une quelconque des revendications précédentes, et comprenant: un conduit (19), qui est connecté de façon hydraulique au circuit hydraulique (6); et une connexion de tuyau (20), en particulier une connexion en forme de T, à laquelle le conduit (19), l'unité de dispersion de liquide (14) et les moyens d'alimentation (22, 23) sont connectés dans une position qui correspond à celle dans laquelle la soupape de commande (30) est réglée et opère.

6. Dispositif selon l'une quelconque des revendications précédentes, et comprenant une deuxième unité de régulation (25) conçue pour réguler un écoulement de liquide à travers l'unité de dispersion de liquide (14).

7. Dispositif selon la revendication 6, et comprenant des moyens de capteur (27; 28) pour détecter la concentration de la substance chimique dans le liquide; et une unité de commande (26) qui est connectée aux moyens de capteur (27; 28) et à la deuxième unité de régulation (25) pour commander l'unité de régulation (25) en fonction de ce qui a été détecté par les moyens de capteur.

8. Dispositif selon l'une quelconque des revendications précédentes, dans lequel le circuit hydraulique (6) est hydrauliquement connecté à l'unité de dispersion (14) et aux moyens d'alimentation (22, 23) pour amener le liquide à l'unité de dispersion (14) et aux moyens d'alimentation (22, 23).

9. Dispositif selon l'une quelconque des revendications précédentes, dans lequel lesdits moyens de support (11, 12) comprennent des moyens de confinement latéraux (12) qui sont au moins partiellement inclinés et qui sont conçus pour supporter la substance chimique solide (2) latéralement.

10. Dispositif selon l'une quelconque des revendications précédentes, dans lequel la chambre de chargement (10) présente au moins partiellement une forme rétrécie vers le bas.

11. Dispositif selon la revendication 10, dans lequel la chambre de chargement (10) présente au moins partiellement une forme choisie dans le groupe comprenant les formes sensiblement conique, sensiblement tronconique, sensiblement pyramidale et sensiblement tronco-pyramidale.

12. Dispositif selon l'une quelconque des revendications précédentes, dans lequel lesdits moyens de support (11, 12) sont au moins en partie perméables aux liquides.

13. Dispositif selon l'une quelconque des revendications précédentes, dans lequel ladite partie de collecte (8) comprend une partie inférieure (18) qui présente une forme sensiblement rétrécie vers le bas; en particulier, la partie inférieure (18) présente des parois latérales inclinées.

14. Dispositif selon la revendication 13, dans lequel la partie inférieure (18) présente une forme choisie dans le groupe comprenant les formes sensiblement conique, sensiblement tronconique, sensiblement pyramidale et sensiblement tronco-pyramidale.

15. Dispositif selon l'une quelconque des revendications précédentes, dans lequel le récipient (3) est modulaire.

16. Procédé pour dissoudre une substance chimique solide (2) dans un liquide et amener une solution du liquide et de la substance chimique à un circuit hydraulique (6), comprenant en particulier un réservoir (7), le procédé comprenant les étapes suivantes:
dissoudre la substance chimique solide (2) dans un dispositif (1) en amenant au dispositif (1) un premier écoulement de liquide arrivant en provenance du circuit hydraulique (6) de telle sorte que ledit premier écoulement entre en contact avec la substance chimique solide (2) et dissolve la substance chimique solide (2) elle-même au moins partiellement, et ladite solution est obtenue; et
collecter la solution dans une partie de collecte (8) dudit dispositif (1);
le procédé étant **caractérisé en ce qu'**il comprend les étapes suivantes:
amener d'une façon sensiblement continue la solution contenue dans la partie de collecte (8) au circuit hydraulique (6);
amener un deuxième écoulement de liquide du circuit hydraulique (6) au dispositif (1) à la partie de collecte (8) d'une façon sensiblement continue et de telle sorte que la solution dans la partie de collecte (8) n'atteigne pas un niveau maximum donné; et
une étape de régulation de la vitesse dudit deuxième écoulement de liquide au moyen d'une unité de régulation (29) en fonction du niveau de la solution à la partie de collecte (8).

17. Procédé selon la revendication 16, dans lequel un équilibre dynamique est obtenu qui permet un écoulement d'entrée et un écoulement de sortie continus du liquide dans/hors de la partie de collecte (8).

18. Procédé selon la revendication 16 ou 17, dans lequel la vitesse dudit premier écoulement est modifiée avec le temps; en particulier le premier écoulement est discontinu et est alternativement bloqué et activé.

19. Procédé selon l'une quelconque des revendications 16 à 18, dans lequel le dispositif (1) est défini selon l'une quelconque des revendications 1 à 15.

20. Système comprenant un dispositif (1) pour dissoudre une substance chimique solide (2) et un circuit hydraulique (6) selon l'une quelconque des revendications 1 à 15.
